# EUROPEAN PATENT APPLICATION

(11) **EP 2 586 965 A2**
(43) Date of publication of application: **01.05.2013**
(21) Application number: 12190284.5
(22) Date of filing: 26.10.2012
(51) Int. Cl.: E21B 47/10

(54) **A downhole logging tool**

(30) Priority: 28.10.2011 GB 201118667
(71) Applicant: Omega Well Monitoring Limited, Aberdeen AB21 0GP (GB)
(72) Inventor: Smart, Paul, Fraserburgh, Aberdeenshire AB43 8QJ (GB)
(74) Representative: Harrison Goddard Foote

(57) **Abstract**

A downhole logging tool, comprising: a sensor device (9)comprising a sensor configured to electrically detect at least one physical characteristic downhole fluid such as temperature or flow. The sensor comprises a bridge circuit having a four electric components (201-204) for electric detection of the physical characteristic. The electric components, often resistors, are often spaced apart in pairs where a first (201) and second (202) components are situated together next to each other; third (203) and fourth (204) electric components are situated together in close proximity and next to each other; whilst first (201) and the third (203) electric component are configured to be in parallel with the second (202) and the fourth (204) electric components. A heater (23) may be added to the tool to generate a pulse of heat which may be detected by the sensors and provide data indicative of flow in the well. Accordingly embodiments of the invention can detect temperature in a well, and indeed fluid flow, which can be indicative of leaks in the well.

## Description

### Technical Field

The present disclosure relates to a downhole logging tool. More particularly, the present disclosure relates to a modular downhole logging tool, wherein a module comprises at least one electronic sensor.

### Background

It is often necessary in a competed subterranean well, i.e. a wellbore, to precisely detect a leak, in case there is a leak within the wellbore. In order to detect the leak, it is important to detect the physical characteristics of the leak such as the flow rate, the flow direction, the temperature of the fluid, pressure of the fluid, etc. Leak detection systems such as particular leak detecting downhole logging tools have been developed for these kind of purposes. A downhole logging tool comprises the downhole hardware needed to make a log, for example about the above described physical characteristics of the wellbore. The downhole logging tool is run into the wellbore and is either moved within the wellbore or is positioned at a point of interest within the wellbore. The tool senses and monitors the above described physical characteristics of the wellbore while located within the wellbore, such as the flow rate or temperature within the wellbore. The tool then either stores or logs the monitored characteristics into a data storage device provided in the tool (in which case the tool must be retrieved to surface) or transmits the data back to surface for storage top side. The logged data can then be analysed to detect the leak.

It is becoming more critical in relation to leak detection to be able to detect small flows that previously may have been undetected. Moreover, the characteristics of the wellbore should be detected evermore precisely. For example it is important to know if there is a leak, and if so, where the leak (or several leaks) occur relative to the depth of the wellbore. Also, it is not enough to merely measure the amount of leak, rather a clear and reliable indication of the depth of the leak is also needed. In addition to measuring flow rate, it is very important to sense the flow direction of a leak particularly in some zones of the well such as to detect a critical cross flow between zones surrounding the well bore.

Known leak detection systems such as known downhole logging tools are not sufficiently accurate and are often not able to detect many of the physical characteristics or type of the leak. In addition to accuracy and variety of usage, reliability and sustainability of the tool are also problems for leak detections systems. The known logging tools typically have mechanical or mechanically moving parts for leak detection such as impellers etc. These kinds of mechanically moving part solutions suffer in particular because their bearings clog in well fluid, reducing the sensitivity and becoming unusable sometimes in a matter of in minutes. The tools normally required to be changed between each job. Moreover they are vulnerable to damage as well as wearing, being particularly relevant in the challenging downhole environment where the tool has to operate. For example, a mechanical impeller, wheel, gear or axle can break or be worn out. This is particularly relevant if the tool is a permanent gauge intended to remain within the wellbore (for instance as part of the production tubing completion) for many years. Therefore reliability is a very important feature for downhole logging tools as well.

Other known and existing approaches to leak detection include noise logs - using a hydrophone and signal processing to 'hear' a leak, and active and passive ultra sonic systems. However, noise log and ultra sonic detectors need to know the fluid parameters that effect the speed of sound (composition of fluid, density, temperature and pressure), as these alter the sensor response. Therefore these kinds of known noise or sonic based systems are complicated and expensive. Also, the noise or ultrasonic detection systems cannot measure the required physical characteristics of the well as indicated above.

The present invention is directed to overcoming one or more of the problems as set forth above.

### Summary of the Invention

In one aspect, the present invention is directed to a device especially a downhole logging tool, comprising:
a sensor device comprising a sensor configured to electrically detect at least one physical characteristic of downhole fluid and to output a signal representative of the detection;
wherein the sensor comprises a bridge circuit having a first, second, third and fourth electric component for electric detection of the at least one physical characteristic of the downhole fluid.

The sensing device may or may not be modular.

The invention also provides a sensor module comprising a sensor configured to electrically detect at least one physical characteristic downhole fluid and to output a signal representative of the detection;
wherein the sensor comprises a bridge circuit of electric components for electric detection of the at least one physical characteristic of the downhole fluid.

In preferred embodiments, the bridge elements are physically distributed and are typically arranged such that the bridge output is zero when the physical characteristic of the fluid (which may be the ambient temperature) is the same at each of the elements, allowing a very large gain, resulting in extreme sensitivity to local varying fluid conditions.

The sensing point of the sensor is preferably located at the centre of the distributed elements.

Typically, the sensor comprises four sensor components, wherein first and second sensor components are situated in close proximity and preferably next to each other, third and fourth sensor components are situated in close proximity and preferably next to each other within the module at a distance apart from the first and second sensor components. For example they may be a distance of at least 5mm apart, optionally at least 10mm apart, optionally at least 30mm apart. Certain embodiments are 60mm apart +/- 5mm.

Preferably, within the bridge circuit the first and the third sensor components are configured to be in series in a first arm, the second and the fourth sensor components are configured to be in series in a second arm, and the first and the third sensor components in the first arm are configured to be in parallel with the second and the fourth sensor components in the second arm. Preferably, the first and the fourth sensor components are diagonally opposite sensor components within the bridge circuit, and the second and third components are diagonally opposite sensor components within the bridge circuit.

Preferably, an output of the bridge circuit is indicative of a local variation in the temperature of the fluid between the sensor components situated distally apart from each other. Typically, the sensor components comprise electric components that are configured to vary in a predictable way with respect to temperature. Preferably, the electric sensor components have a known resistance at a particular temperature and more preferably, the electric sensor components are adapted to vary their resistance in a predictable way with respect to temperature. Most preferably, the electric sensor components comprise platinum resistance devices.

A variety of resistance strengths may be used. For example, when operating at 3V the resistance devices are normally at least 10 ohms, and preferably 100 ohms or 1000 ohms as described herein.

The gradient of resistance versus temperature of a preferred embodiment of a platinum resistance device, as defined by ITS-90 (International Temperature Standard), is 0.003925 ohm/ohm °C. Embodiments may use such a gradient of between 0.001 to 0.1 or from 0.003 to 0.005. However other gradients are also suitable for alternative embodiments especially where other parameters are varied.

Other possible sensing components include thermistors and diode junction voltages. Further sensing components include a transistor and potentially a capacitor; although capacitors are less preferred.

Preferably, the module comprises a temperature module including a sensor for electric detection of temperature variations of the fluid. The sensor and/or the electric sensor components are preferably platinum resistance of 1000 Ohms arranged in a bridge, with each of the diagonally opposite elements preferably co-located a distance away from the other element pair, with the effective sensing point preferably being half way between the two locations. The normal situation is a common ambient temperature at both locations - resulting in zero output, permitting a very large gain to be used. Any local variations are then seen with great sensitivity.

Typically, the first and the third electric components are configured to have a higher resistance (at a given temperature) than the second and the fourth electronic components.

Preferably, the third electric component comprises several components in parallel so as to establish the lower resistance for balance, but with a small current in each resistance. Typically, the first and the second electric components are configured to be located in the housing so as to be in close thermal contact to the downhole fluid. The arms of the bridge are preferably of different resistance, however, each arm typically has two elements of the same nominal resistance value (at the same temperature).

Preferably, the first and the second components are configured to be of different resistance so that flow of the downhole fluid removes more heat from the electric component having lower resistance than from the component having higher resistance. Typically, the third and the fourth electric components are configured to be located inside the housing so as to detect ambient temperature with a lag for balancing ambient temperature changes. Typically, an output of the circuit is indicative of flow rate of the downhole fluid.

Optionally, the downhole logging tool includes a feedback loop circuit which is configured to drive the bridge circuit and to maintain generally constant output of the bridge circuit, wherein a control signal of the feedback loop is an indication of the flow of the downhole fluid. Preferably, the module comprises a flow meter module including the sensor for electric detection of the flow of the fluid.

Preferably, the downhole logging tool includes a heater normally situated between a first pair of electric components, and a second pair of electric components. Typically, the heater is configured to introduce a heat pulse to the downhole fluid so that the heat pulse moves along with the flow of the fluid. Typically, the output of the bridge circuit is indicative of the detection of the heat pulse at one pair of the two pairs of electric components so as to detect the direction of the flow. Preferably, the downhole logging tool includes a channel receiving the flow of the downhole fluid, the channel containing the two pairs of electric components and the heater within the wall of the channel.

Alternatively, the sensor could use a cooling device, such as a peltier TEC, instead of a heater, as all that is required is a local change of temperate pulse, generated preferably half way between a pair of differential temperature sensors.

Preferably, the electric components are configured to be mounted on a housing to be in proximity with the fluid. Typically, the downhole logging tool includes an insulation layer on the outer surface of the housing. Typically, the downhole logging tool includes an insulation layer between the electric component and the housing.

In another aspect, the present invention is directed to a device especially a downhole logging tool, comprising;
two or more sensor modules configured to be detachably attached with each other, wherein each sensor module is configured to electrically detect at least one physical characteristic of downhole fluid and to output a signal representative of the detection;
a control module configured to receive the signals from the at least two or more sensor modules, wherein the control module is further configured to provide data representative of the signals for use in detection of a downhole leak.

A logging tool normally records data received or may provide real-time read out as an alternative or more commonly as well as recording the data.

Preferably, the control module is further configured to merge and synchronize the data representative of the signals. Preferably, each module comprises one or more electrical sensors configured to electrically detect at least one physical characteristic of the downhole fluid. Typically, the sensor modules do not include mechanically moving parts for the detection of the fluid; this provides the advantage that the reliability of the sensor modules and the tool is increased.

Preferably, each sensor module is configured to use a different detection method or sensor arrangement to electrically detect at least one physical characteristic of the downhole fluid.

Preferably, each sensor module comprises a data bus for the signal so that when the two or more sensor modules are attached, the data bus of the modules are configured to be coupled with each other to transfer the signals to the control module through the sensor modules.

Typically the downhole logging tool includes a housing so that a body of each module is configured to establish the housing when the two or more modules are attached.

Preferably, the sensor module includes a connector module configured to connect the downhole logging tool to a leak detection system. Typically, the connector module comprises an interface configured to couple the downhole logging tool to a computer so that the stored data can be uploaded to a computer of a leak detection system.

Preferably, the interface is coupled to a slickline. Alternatively it is coupled to a wireline. The interface is preferably adapted to be connectable to a computer at the surface of the downhole wellbore when the tool is pulled out of the wellbore and/or is located at the surface. Alternatively, the interface is coupled to electric wire that typically extends from the tool back to surface so the data can be uploaded when the tool is located within a wellbore.

Typically, the sensor module comprises a casing collar locator module including a magnetic sensor configured to detect a downhole casing collar by magnetic detection, wherein the detection is indicative of the depth of said module within a wellbore. Preferably, the magnetic sensor comprises silicon magnetometers.

Preferably, the casing collar locator module is further configured to detect which sensor modules are connected and ready for use, and to trigger the sensor modules to start the detection.

In another aspect, the present disclosure is directed to a device especially a downhole logging tool, comprising
a casing collar locator module including at least one silicon magnetometer magnetic sensor configured to detect a casing collar located downhole in a wellbore by magnetic detection, wherein the detection is indicative of the depth of the downhole logging tool located within the wellbore.

In another aspect, the present invention is directed to a device especially a downhole logging tool, comprising:
a sensor module comprising a sensor configured to electrically detect at least one physical characteristic of downhole fluid and to output a signal representative of the detection;
wherein the sensor module comprises a first detection point and a second detection point situated distantly apart from the first detection point, and wherein the sensor is configured to electrically measure a difference between the first detection point and the second detection point.

Preferably, the sensor comprises four sensor components, wherein first and second sensor components are located at the first detection point, third and fourth sensor components are located at the second detection point. Typically, the electric components are configured to establish a bridge circuit so that the first and the third sensor components are configured to be in series in a first arm, the second and the fourth sensor components are configured to be in series in the second arm, and the first and third sensor components in the first arm are configured to be in parallel with the second and the fourth sensor components in the second arm.

Preferably, the first and the fourth sensor components are diagonally opposite sensor components within the bridge circuit, and the second and third components are diagonally opposite sensor components within the bridge circuit.

Preferably, an output of the sensor is indicative of a local variation in the temperature of the fluid between the first and the second detection points. Typically, the detection points comprise electric sensor components that are configured to vary in a predictable way with respect to temperature.

Preferably, the module comprises a temperature module including a sensor for electric detection of temperature variations of the fluid between the detection points.

Preferably, the first detection point comprises electric components, which are configured to have a higher resistance than electric components of the second detection point.

Typically, the second detection point comprises electric components in parallel so as to establish the higher resistance.

Preferably, the first and the second detection points are configured to be located in the housing so as to be in close proximity with the downhole fluid.

Preferably, an output of the sensors is indicative of the flow rate of the downhole fluid. Preferably, the module comprises a flow meter module including the sensor for electric detection of the flow of the fluid.

Preferably, the downhole logging tool includes a heater situated between a first detection point and the second detection point. Typically, the heater is configured to introduce a heat pulse to the downhole fluid so that the heat pulse moves along with the flow of the fluid. Typically, the output of the sensor is indicative of the detection of the heat pulse at one of the detection points so as to detect the direction of the flow.

Preferably, the downhole logging tool includes a channel receiving the flow of the downhole fluid, the channel containing the two detection points and the heater within the walls of the channel.

Preferably, the downhole logging tool includes an insulation layer between the detection points and the housing.

At least one of the above embodiments provides one or more solutions to the problems and disadvantages with the background art. Other technical advantages of the present disclosure will be readily apparent to one skilled in the art from the following description and claims. Various embodiments of the present application may provide only a subset of the advantages set forth. No one advantage is critical to the embodiments. Any claimed embodiment may be technically combined with any other claimed embodiment(s).

### Brief Description of the Drawing

The accompanying drawings illustrate presently preferred exemplary embodiments of the disclosure, and together with the general description given above and the detailed description of the preferred embodiments given below, serve to explain, by way of example, the principle of the invention.
Figure 1 shows a side, cross-sectional view of a wellbore comprising a downhole logging tool according to an exemplary embodiment of the present invention;
Figure 2 shows a side, cross-sectional view of a downhole logging tool according to an exemplary embodiment of the present invention;
Figure 3 is a diagrammatic illustration of a sensor arrangement used in the differential temperature module of Figure 4A;
Figure 4A shows a differential temperature module for use in a downhole logging tool according to another exemplary embodiment of the present invention;
Figure 4B shows a side, cross-sectional view of the differential temperature module of Figure 4A;
Figure 5 show a side, cross-sectional view of the differential temperature module of Figure 4A;
Figure 6 is a diagrammatic illustration of a flow meter module according to an exemplary embodiment of the present invention;
Figure 7 is a diagrammatic illustration of a sensor arrangement used in the direction module of Figure 8A;
Figure 8A shows an example of a direction module for use in a downhole logging tool according to exemplary embodiment of the present invention;
Figure 8B shows a side, cross-sectional view of the direction module of Figure 8A;
Figure 9A shows a further side, cross-sectional view of the direction module of Figure 8A;
Figure 9B shows another further side, cross-sectional view of the direction module of Figure 8A;
Figure 10 is a diagrammatic illustration of a casing collar locator module of Figure 11A according to an exemplary embodiment of the present invention;
Figure 11A shows an example of a casing collar locator module for use in a downhole logging tool according to an exemplary embodiment of the present invention;
Figure 11 B shows a side, cross-sectional view of the casing collar locator module of Figure 11A;
Figure 11 C shows a side, cross-sectional view of a casing collar locator module of Figure 11A but without the housing shown, for clarity; and,
Figure 12 is a diagrammatic illustration of a sensor probe in the downhole logging tool according to an exemplary embodiment of the present invention.

### Detailed Description

An embodiment of the present invention provides a downhole logging tool, comprising: a sensor module comprising a sensor configured to electrically detect at least one physical characteristic downhole fluid such as temperature or flow. The sensor comprises a bridge circuit having a four electric components for electric detection of the physical characteristic. The electric components, often resistors, are often spaced apart in pairs where a first and second components are situated together next to each other; third and fourth electric components are situated together in close proximity and next to each other; whilst first and the third electric component are configured to be in parallel with the second and the fourth electric components. A heater may be added to the tool to generate a pulse of heat which may be detected by the sensors and provide data indicative of flow in the well.

An embodiment of the present invention provides a downhole logging tool comprising two or more sensor modules configured to be detachably attached with each other. Each sensor module is configured to electrically detect at least one physical characteristic of downhole fluid and to output a signal representative of the detection. A control module is configured to receive the signals from the at least two or more sensor modules. The control module is further preferably configured to store data of the signals for use in the detection of a leak within the wellbore. Therefore the tool can be modular and be of modular construction for different types of detection methods. The modules of the tool can be controlled centrally.

An embodiment of the present invention is directed to a downhole logging tool comprising a sensor module. The sensor module has a sensor, which is configured to electrically detect at least one physical characteristic of downhole fluid and to output a signal representative of the detection. The sensor comprises a bridge circuit of electric components for electric detection of the fluid. Therefore, no mechanically moving parts are required. The detection can be reliable and very sensitive. The bridge circuit can be similar to a Wheatstone bridge, which is an electrical circuit used to illustrate the concept of a difference measurement, which can be extremely sensitive. The bridge circuit can alternatively be referred to as a bridge coupling or just a bridge.

An embodiment of the present invention is directed to a downhole logging tool, comprising a casing collar locator module. The casing collar locator module has at least one silicon magnetometer magnetic sensor, which is configured to detect a casing collar located downhole in a wellbore by magnetic detection. The detection is indicative of the depth of the downhole logging tool located within the wellbore. The silicon magnetometer provides an accurate and a very high resolution detection component for the tool.

An embodiment of the present invention is directed to a downhole logging tool. It comprises a sensor module having a sensor configured to electrically detect at least one physical characteristic of downhole fluid and to output a signal representative of the detection. The sensor module comprises a first detection point and a second detection point situated distantly apart from the first detection point. The sensor is configured to electrically measure a difference between the first detection point and the second detection point.

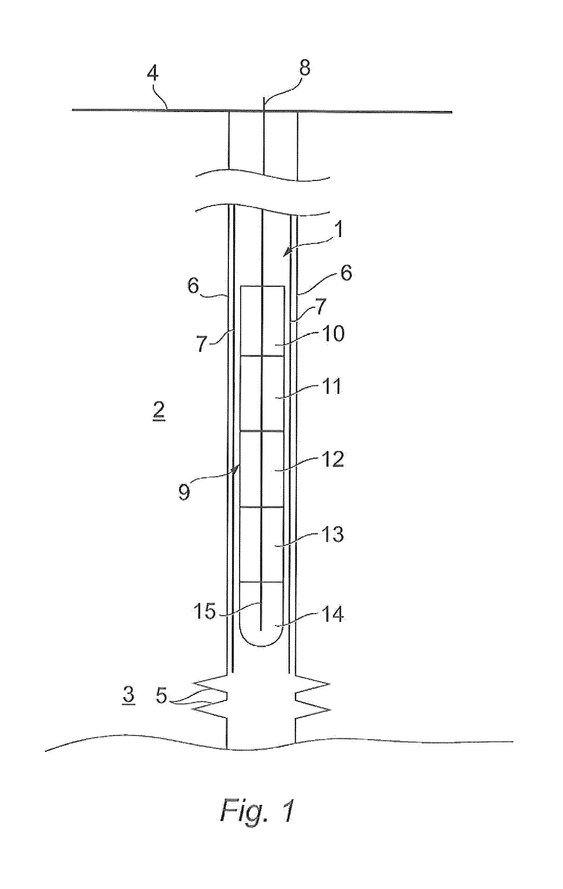

Referring to Figure 1, there is illustrated an exemplary wellbore 1 which has been drilled through the earth 2 down to a hydrocarbon bearing formation or reservoir 3 from the surface 4. Alternatively, the wellbore 1 can be referred to as a borehole 1. The wellbore 1 typically comprises a casing tubing 6 cemented in place, framing or surrounding the wellbore 1, and protecting or isolating formations adjacent to the wellbore 1. Perforations 5 extend through the casing 6 and wellbore 1 to permit hydrocarbon production from the formation 3 into the wellbore 1.

As is conventional in the art, the casing tubing 6 comprises an assembled length of pipe configured to suit the wellbore 1. The sections of pipe are cemented into the wellbore 1. The casing pipe joints are typically approximately 12 meters in length. The pipes are coupled to each other by couplings referred to in the art as casing collars.

A production tubing 7 is typically installed inside the casing tubing 6 to permit hydrocarbon production to be produced from the formation 3 to the surface 4. A leak is an undesired leaking of the hydrocarbon bearing fluid into the well 1, for example into the production tubing 7 from the casing tubing 6 or into the casing tubing 6 from the production tubing 7.

At the distal end of a wireline or slick line string 8 from the surface is affixed a downhole logging tool 9. The tool 9 is shown and configured to be run in within the production tubing 7. The tool 9 is configured to electrically sense at least one of the physical characteristics of the wellbore 1, particularly to detect a fluid leak within the wellbore 1, and possibly within the production tubing 7 and/or casing tubing 6.

Alternatively, in another embodiment of the present invention, the tool 9 can be configured to operate within the wellbore 1 without the wireline/slickline, in that it could be secured to the production tubing 7 at surface and run in on that, such that it is a permanent gauge or downhole logging tool 9.

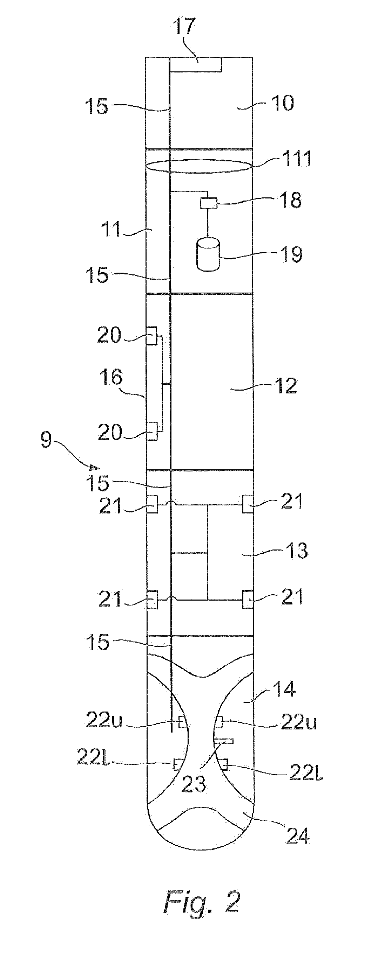

An exemplary logging tool 9 is modular and comprises at its uppermost end a connector module 10 (see Figures 1 and 2), connected at its lower end to the upper end of a Casing Collar Locator (CCL) Module 11 which in turn is connected at its lower end to the upper end of a flow meter module 12 which in turn is connected at its lower end to the upper end of a differential temperature module 13 which in turn is connected at its lower end to the upper end of a flow direction module 14. Each module is configured to electrically sense at least one of the physical characteristics of the downhole fluid and, if present, the leak. Therefore, each module (and the tool 9) does not need mechanical parts specially designed for wellbore leak detection but the detection is based on electronics and electricity. Each module is further configured to electrically sense the leak using a different method for the leak detection. Thus each module has a different method for leak detection, which is implemented electronically. Each module comprises at least one sensor. The exemplary sensor is preferably an electrical or electronic sensor applying electricity to detect the physical characteristics of the wellbore, for example to detect the leak.

The modules 10,11, 12, 13 and 14 are coupled by a common bus 15 such as a wire bus 15. The modules and accordingly the respective sensors are all on the common bus 15 and are therefore electrically coupled with each other. Although five modules are shown, the tool 9 is modular so that the detection instrument can be made up of one or more of the sensor modules 10, 11, 12, 13, 14.

The tool has a bus master module 11 located within a CCL module 11 for maintaining/storing (or in an alternative embodiment, transmitting to surface) the collected and detected data. The master module 11 is coupled with all sensor modules 10, 12, 13, and 14. The data, detected and collected by the sensor modules 10, 12, 13, and 14 is synchronized and merged in the master module 11 to detect the indication of the leak.

The bus master module 11 is provided with data storage means such as memory chips such that the tool 9 can be used as a memory instrument on a wireline/slick line or as a surface read out instrument. The tool 9 can be powered by electric wire located within the wireline such that it operates as a surface powered instrument within the wellbore 1 or it can be powered by onboard power means such as batteries. Alternatively, the tool 9 can be used as a permanent gauge, because there are generally no mechanically moving parts.

An exemplary downhole logging tool 9 is shown in Figure 2. As shown, the logging tool 9 includes a generally cylindrical tool body or housing 16. The body 16 is made of the interconnected modules 10 to 14. The body 16 serves to protect the sensor, electronics, etc. of the tool 9.

### CONNECTOR MODULE 10

The tool 9 comprises at its upper most end a connector module 10 which comprises an interface 17, which is used to connect the stored detection data of the tool 9 to an outside leak detection system such as a computer running a leak detection analysis program.

The connector module 10 can have at least two alternative embodiments. The connector module 10 can be connected to a slick line 8. In another embodiment the connector module 10 can be connected to a single electric line/wireline. Alternatively, the connection module 10 can include radio connection or transmitter to wirelessly transmit the data from (and to) the tool 9. The connection module 10 can therefore enable either real time data transmission or the data is transmitted at a certain point of time, for example when the tool 9 is retrieved from the wellbore 1 to the surface.

### CASING COLLAR LOCATOR (CCL) MODULE 11

The downhole logging tool 9 comprises a casing collar locator (CCL) module 11 located immediately below the connector module 10. The CCL module 11 comprises a main bus 18 which can be referred to as a printed circuit board (PCB) or mother board. The main bus 18 can have a processor to process data and perform logic and/or calculation and/or other operations. The main bus 18 controls the connector 17 and the sensors of the modules 10, 11, 12, 13, 14. The main bus 18 saves the data corresponding to the sensor detections into a data storage means 19. The CCL module 11 also comprises a magnetic sensor 111 configured to detect the casing collars located in between each length of casing tubing pipe 6 for accurately indicating a depth of the tool 9 within the wellbore 1. The main bus 18 receives also the data corresponding to the depth information. The CCL module 11 will be described in greater detail subsequently.

### DIFFERENTIAL TEMPERATURE MODULE 13

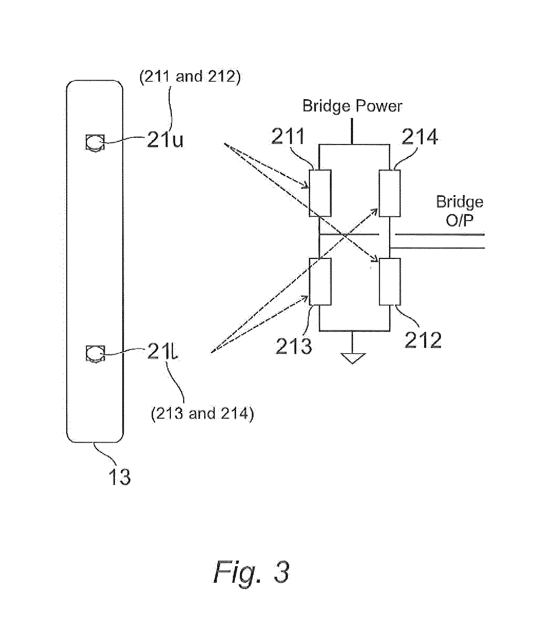

A differential temperature module 13 comprised within tool 9 is also shown in Figure 2. The module 13 comprises at least one upper and at least one lower sensor 21 for electrically detecting the temperature of the flow and surroundings, further details of which are shown in Figure 3. In a preferred embodiment of the invention to be described in more detail subsequently in relation to Figures 3-5, each of the upper 21 U and lower 21 L sensor arrangements have two electric components 211, 212; 213, 214, such as resistor probes, to electrically measure temperature. The components 211, 212; 213, 214 can be coupled by a bridge coupling (not shown in Figure 2 but shown in Figure 3; in Figure 2 the coupling merely illustrates that probes are logically coupled to the bus 15). In the bridge coupling shown in Figure 3, diagonally opposite probes and their components are coupled and collocated at a distance apart. For instance, probes 211, 212 are coupled and co-located at one location on the module 13 and probes 213, 214 are also coupled and co-located at another location on the module 13, the two locations being a distance apart. Thereby the flow temperature can be detected very accurately, as will now be described.

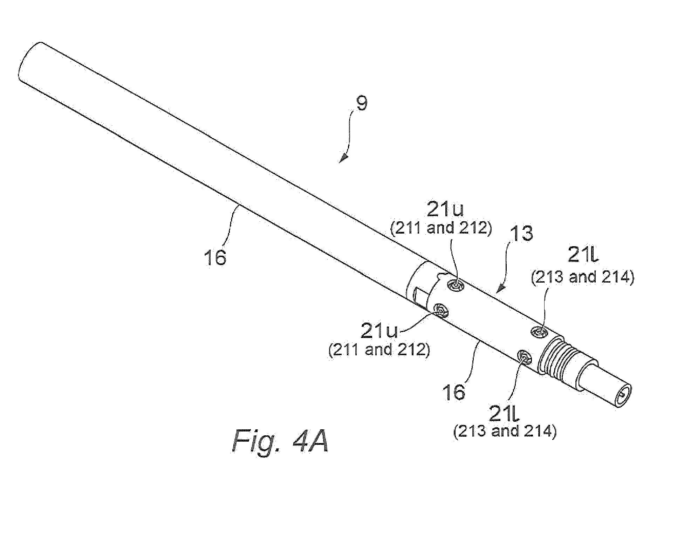

Figure 4A shows a differential temperature module 13 for incorporation into a downhole logging tool 9 according to a preferred embodiment of the present invention. In the embodiment of the invention the electric components 211, 212, 213, 214 are very small and are mounted in pairs 21 U and 21 L in a respective copper stud as shown in Figure 4A in fluid communication with the well fluid to give good thermal communication with the well fluid. The pairs 21 U, 21 L of resistors 211, 212, 213, 214 are mounted in the body 16, such as the pressure housing, in such a way as to reduce the effect of its thermal mass. For example the components 211, 212, 213, 214 are thermally insulated from the body 16. The metal of the body 16 can be insulated to have a thermal lag in response to changes in the environment that will be seen much quicker by the components 211, 212, 213, 214 located within the copper studs.

In the example of Figure 4A the sensor array 21 U, 21 L is repeated four times at right angles - giving all around view of the well 1. Alternatively, three sensor repeats at 120 degrees can be used (not shown).

An exemplary diagrammatic illustration of a sensor arrangement 21 included in the differential temperature module 13 is shown in Figure 3. The sensor arrangement 21 comprises an upper sensor 21 U which itself comprises two sensing components 211, 212 and a lower sensor 21 L which itself comprises two sensing components 213, 214. The sensing components 211, 212, 213, 214 are coupled by a bridge type of electrical coupling as illustrated in Figure 3 and in operation will be very sensitive when measuring a temperature. The sensing components 211, 212, 213, 214 can, for example, preferably be platinum resistance devices such as PT1000 type resistors. As said, a bridge of sensing components 211, 212, 213, 214 is shown, wherein diagonally opposite sensing components (211 and 212) of the bridge arrangement are selected and co-located together but apart from the other pair of the sensing components 213, 214. This is illustrated in Figure 3, wherein components 211, 212 are upper at 21 U and components 213, 214 are lower at 21 L. The electronic coupling of the components is shown. Components 211 and 213 are in series in one arm (left hand arm). Components 214 and 212 are in series in another arm (right hand arm). The arms and accordingly components 211, 213 are in parallel with 214, 212. Electrical characteristics of the platinum resistance sensing components, specifically resistance, vary in a predictable way with respect to temperature. In a constant ambient environment they would have the same value and the output of the bridge (Bridge O/P) would be zero. If however there is a local variation at one of the upper 21 U or lower 21 L sensor arrangements, the physically distributed bridge will be unbalanced and give an output (Bridge O/P). Because the steady state output is zero, the overall sensor arrangement 21 U, 21 L gain can be very high and the sensitivity to local temperature variations is very high. Thereby temperature can be measured very accurately.

The sensing components 211, 212, 213, 214 can be resistors and more preferably platinum resistors such as PT1000s in the bridge. However, any device that has an electric output, which is a function of temperature can alternatively be used, such as for example transistor base emitter junctions, diodes, thermistors, etc. In a further embodiment, the symmetry of the bridge can be improved by using well matched parts - such as a super matched pair of transistors.

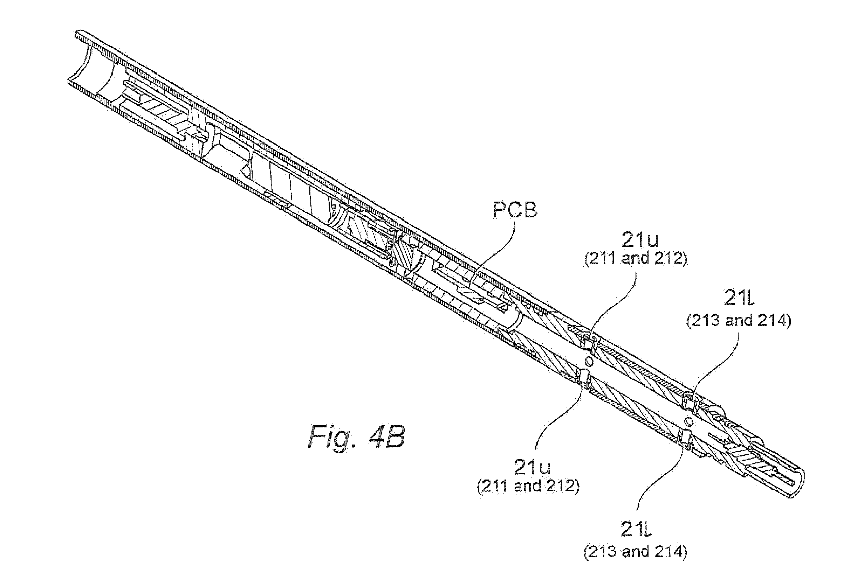

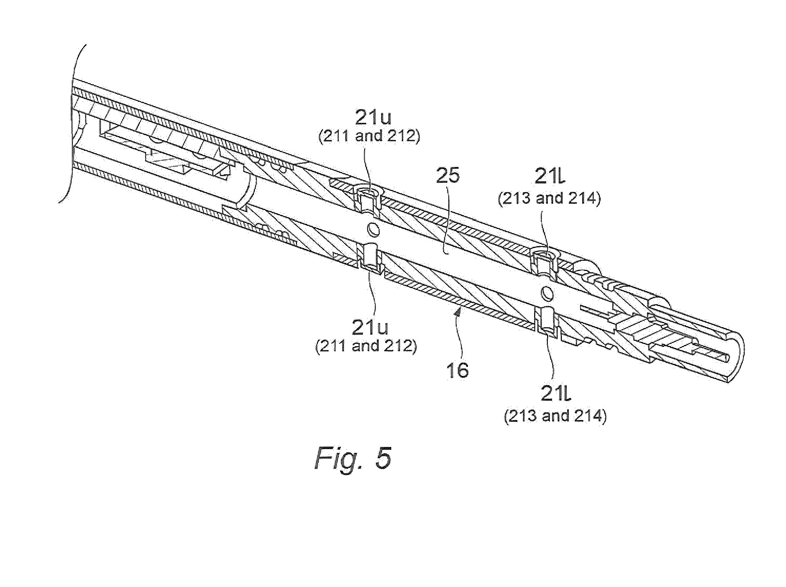

Figure 4B shows a cross section side view of the temperature module 13 of Figure 4A. A printed circuit Board PCB is show in Figure 4B. PCB has logic configured to control the temperature module 13 and receive and transmit signals to by the bus (not shown in Figure 4B). A sensor arrangement 21 u and 21 L are shown in the temperature module 13 in Figure 4B. They are further discussed in the Figure 5, which shows an enlargement of the temperature module 13.

Figure 5 shows a cross section side view of the differential temperature module 13 of Figure 4A. As shown in Figure 5, the module 13 comprises an internal passageway 25, which can used to house the bus 15 inside the logging tool 9. The passageway 25 can be in the region of 10mm wide. Each of the sensor arrangements 21 U, 21 L comprises a copper stud 21 U, 21 L to house the respective pair of components (resistor probes) 211, 212; 213, 214, where the copper studs 21 U, 21 L have an internal diameter in the region of 4mm. There are in total eight copper studs 21.

### FLOW METER MODULE 12

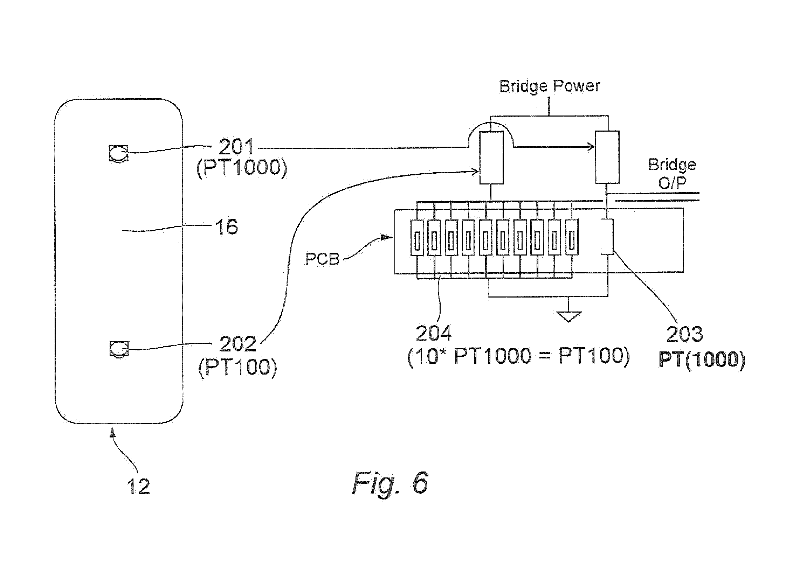

An exemplary flow meter module 12 is also shown in Figure 2. The flow meter module 12 is configured to detect the fluid flow rate in a well. The flow meter module 12 comprises a very similar mechanical layout to that of the differential temperature module 13 except that the sensor arrangement 21 of Figure 3 is replaced in the flow meter module 12 by the sensor arrangement 201, 202 of Figure 6.

The sensor arrangement 201, 202 of the flow meter module 12 is shown in more detail in Figure 6. The flow meter module 12 provides an electronic sensing arrangement for detecting the fluid flow rate in a well. The embodiment of flow meter module 12 can achieve high sensitivity to low flow rates. The sensor 20 comprises a bridge of electric components 201, 202, 203, 204 configured to electrically detect the amount of the flow rate of the fluid within the well.

In a preferred embodiment, the components 201, 202, 203, 204 are preferably resistors such as platinum resistors, PTs, and each of the four sensor arrangements of the flow meter module 12 comprises a bridge of platinum resistors.

The bridge of flow meter 12 is however significantly different from that of the differential temperature module 13, in that the bridge of flow meter 12 comprises one arm component 202 with lower resistance such as a PT100 resistor mounted in its own copper stud probe (not shown) in fluid communication with the well fluid. Accordingly, the bridge comprises another arm that uses a component 201 with higher resistance such as a PT1000 (a platinum 1000 Ohm) resistor mounted in its own copper stud probe (not shown) in fluid communication with well fluid. Accordingly, the upper components 201, 202 of each arm of the bridge are thermally coupled to the well fluid by being mounted in respective copper probe studs in the body 16.

The bridge comprises components 203, 204, for example PT resistors. The components 203, 204 can be considered lower with respect to the components 201, 202 in terms of their position in the bridge. The lower components 203, 204 are however located on a printed circuit board, PCB inside the body 16. The lower/inner components 203, 204 are configured to electrically detect ambient temperature, but with a lag when the environment changes when compared to the upper/outer components 201, 202. The component 204 can be configured such that it is equivalent to a PT 100 (a platinum 100 Ohm) resistor but actually consists of ten PT1000s in parallel such that it has a lower resistance overall, being equivalent to a PT100. Accordingly, the bridge of flow meter module 12 comprises one arm (the left hand arm shown in Figure 6) which in effect uses PT100 resistor components and another arm (the right hand arm shown in Figure 6) which uses PT1000 resistor components 201 and 203. Advantageously, 'self heating' of the resistor components 204 in the left hand arm can be reduced by using low resistance components in parallel. The other component 202 in the left hand arm, which is in thermal connection with the fluid, does self heat, changing its own value - this is superimposed on the value determined by the ambient fluid temperature. The higher resistance component 201 has only negligible self heating. Therefore the component 201 and the warmer component 202 are in use at different temperatures. The flow of the fluid will differentially remove the heat from the two components 201, 202 and their probes-taking more heat from the component 202, which has the lower resistance value. For a steady flow an equilibrium is reached and the output of the bridge (Bridge O/P) is a constant. However, if there is a change in the flow rate the bridge will give an output (Bridge O/P) representing the flow rate.

The component 204 comprises several resistors in parallel. For example the use of the ten parallel PT1000 resistors as an equivalent of a PT100 that does not self heat, enhances the sensitivity and helps keep the bridge output for a constant flow small so the gain can be set large. The use of the PT1000 on the PCB also helps the bridge output to be small for constant flow. The PT1000s on the PCB have a thermal lag in seeing changes in ambient temperature, but the lag is the same for both arms and the bridge balance is retained as equilibrium is being established. Alternatively, the lower/inner components 203,204 (shown on the PCB in Figure 6) can also be mounted in the copper stud probes in the housing 16, to reduce the lag as the ambient temperature changes so at all times the output of the bridge is caused only by the heat removal from the PT100 that is self heated, due to fluid flow.

In other words, with the lower bridge elements 203, 204 mounted on the PCB and experiencing a lag, the long established ambient results in a constant bridge, but as a leak is passed the bridge output is a combination of the flow signal (due to the differential heat removal) and any local change of temperature associated with the leak (since the fluid coupled sensors 201, 202 will see that for a lag time before the PCB mounted sensors 203, 204). This combined flow and temperature change will indicate the presence of a leak by two superimposed methods. However, if a more pure flow signal is required then in an alternative embodiment (not shown) it is possible to mount the lower bridge elements 203, 204 closely coupled to the fluid and this will remove the thermal lag, and thus the bridge output is only the flow signal due to differential heat removal from the upper sensors 201, 202 that are at different temperatures due to differential self heating.

In the preferred embodiment of the invention, the bridge upper components 201,202 are very small and are mounted in respective copper studs of the body 16 to give good thermal communication to the well fluid, and are mounted in the housing 16 in such a way as to reduce the effect of its thermal mass. The components 201, 202 can be thermally insulated from the body 16. Thus the metal of the housing 16 is insulated to make it have a thermal lag in response to changes in the environment that will be seen much quicker by the components 203, 204 beneath/within the copper studs.

The sensor array of the components 201, 202, 203 and 204 is repeated four times at right angles - giving a view in each direction within the wellbore 1. Alternatively three sensor repeated at 120 degrees can be used.

The module 12 is electrically an open loop system with an output depending on the flow of the fluid differentially removing heat from the self heated sensor, for example from the component 202. At no flow there will be a DC output (Bridge O/P). The output (Bridge O/P) changes with flow. Because the bridge is balanced, ambient temperature does not affect the output (Bridge O/P). Alternatively, a control signal (not shown) for the bridge can be used as an indication of the flow and in such an alternative embodiment, the bridge is now intended to have a constant output, which is driven by a feedback loop; the control signal is then an indication of the flow.

The components 201, 202, 203, 204 and the bridge of the fluid flow module 12 is illustrated with PT100 and PT 1000 platinum resistors. Alternatively devices, which have an electric output that is a function of temperature, can be used such as transistor base emitter junctions, diodes, thermistors, etc. The symmetry is improved by using well matched parts - such as a super matched pair of transistors.

### FLOW DIRECTION MODULE 14

The tool 9 comprises a flow direction module 14 as also shown in Figure 2 at its lower most end. The module 14 is configured to electrically detect the direction of the flow (i.e up or down) within the wellbore 1. It has a sensor arrangement 22U, 22L having electrical components. The module 14 has also a temperature generator 23 and a channel 24 for the flow of the fluid from the wellbore. The temperature generator 23 introduces a temperature pulse to the fluid flowing in the channel 24. The electric components 22U, 22L detect the flow of the heat pulse along with the flow of the fluid. The components 22U, 22L can therefore identify which direction the flow is. The components 22U, 22L and the generator 23 are electric components such as resistors and most preferably are platinum resistors. The channel 24 is illustrated inside the tool, however the channel can be alternatively situated on the outer surface of the tool 9 (not shown) as long as the components 22U, 22L and the generator 23 are situated along the alternative outer surface channel 24.

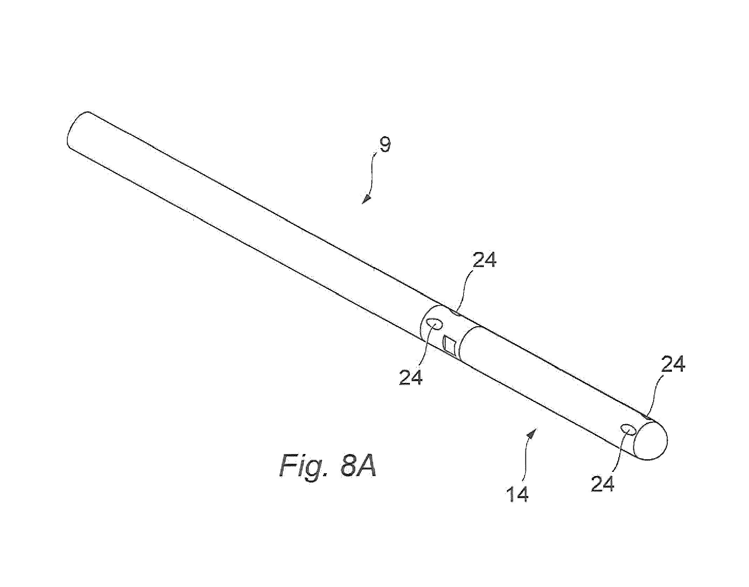

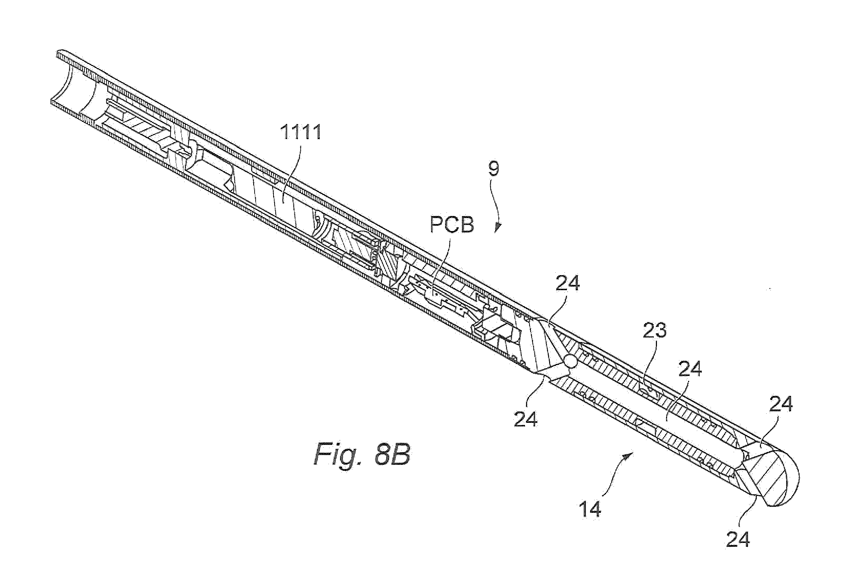

Figure 8A shows an example of the direction module 14 for use in the downhole logging tool 9. Channels 24 configured to receive the downhole fluid are shown in the direction module 14. The direction module 14 is further discussed in Figure 8B showing an enlargement of the direction tool 14 of Figure 8A.

Figure 8B shows a more detailed side, cross-sectional view of the direction module 14. Fluid channels 24 are shown within the module 14. A diameter of the channels 24 entering the module 14 can, for example be 6mm and the diameter of the channel 24 inside the module 14 close to the sensors 22U, 22L can be 10mm. The channel 24 has two input channel portions, two output channel portions and a central channel. It should be noted that channel 24 can be alternatively located on the outer surface of the module 14 and need not be inside the module 14 (not shown). Although the channel 24 is of X shape design another designs can be used merely to enable wellbore fluid to enter and leave the channel 24. Printed Circuit Board PCB and a battery 1111 are shown in Figure 8B. PCB is configured to receive signal from the flow direction module 14 by the bus (not shown in Figure 8B). A battery 1111 is also shown in Figure 8B, which produces power for the PCB and further for the flow direction module 14.

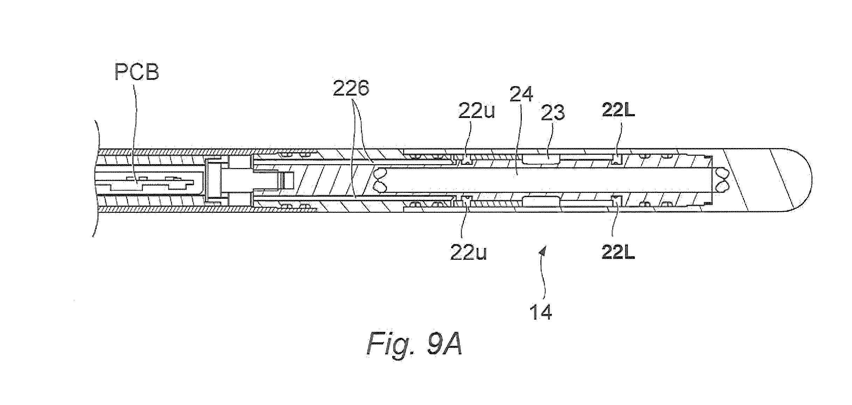

Figure 9A shows a side, cross-sectional view of an exemplary configuration of the sensor array 22 within the channel 24. The sensors 22U, 22L are located inside the module 14 at the surface of the channel 24 so as to detect the flow and temperature of the wellbore fluid flowing within the channel 24. The sensors 22U, 22L are coupled with a cable 226 into the bus 15 to signal the detected temperature and the direction of the flow accordingly.

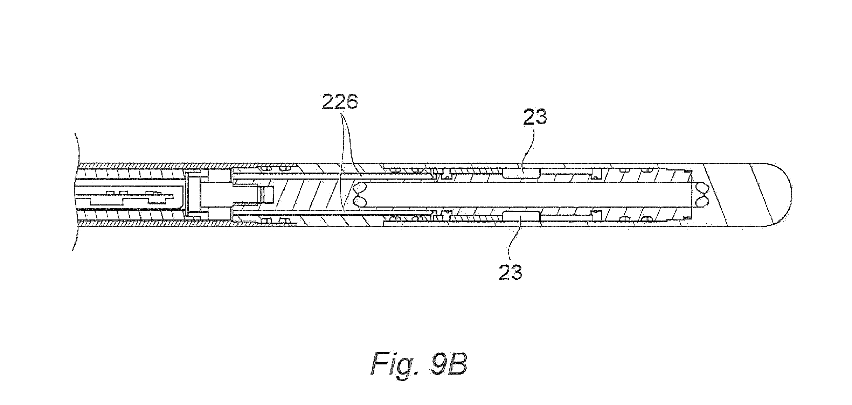

Figure 9B shows another side, cross-sectional view of the exemplary configuration of the flow direction module 14 of Figure 8A. The heater 23 is illustrated within the module 14 to provide the heat pulse to the channel 24. The cables 226 are shown in Figure 9B.

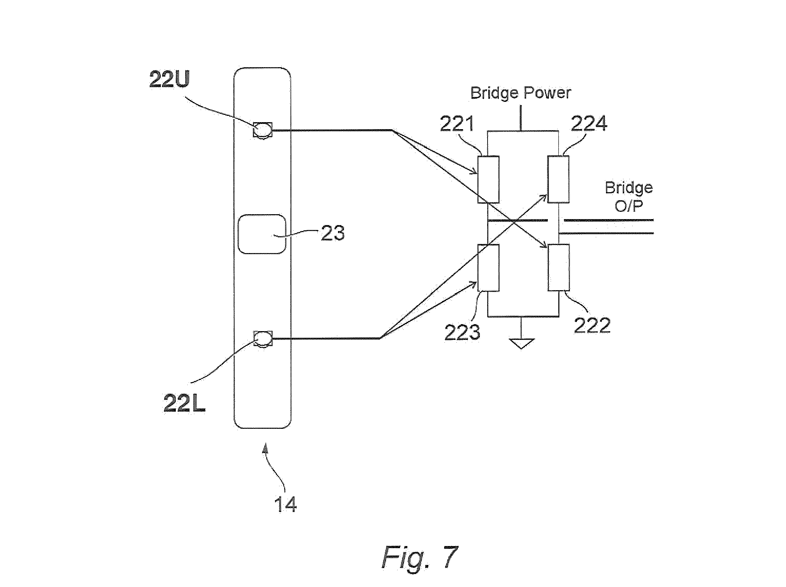

An exemplary diagram of the sensor arrangement used within the flow direction module 14 is illustrated in Figure 7. The flow direction module 14 uses a similar bridge and resistor component arrangement 22U, 22L to that used in the differential temperature sensor, for example as described above with respect to module 13. Additionally, the direction module 14 comprises a heater 23. The heater 23 is situated between the upper 22U (221, 222) and lower 22L (223, 224) sensing pair and is typically located exactly half way between the pairs 22U, 22L. The heater 23 is configured to introduce a pulse of heat to the wellbore fluid within the channel 24. The pulse of heat moves along with the fluid flow, arriving at one of the sensing pair first (say the upper pair 22U (221, 222) if the fluid flow is in the upwards direction) and disturbing the balanced bridge coupling of the components 221, 222, 223, 224. The direction of the disturbance of the bridge corresponds to the direction of fluid flow. For example, the flow transfers the heat pulse to the upper pair 22U (221, 222). The electronically balanced bridge receives the heat pulse as a change in the resistance for components 221,222. Therefore, the bridge produces an output corresponding to this change and the direction of the flow can be detected.

The bridge is normally balanced with zero output at a constant ambient temperature, allowing a very large gain which gives the sensor arrangement of the flow direction module 14 great sensitivity to small local variations in temperature.

The sensor array of the components 221, 222, 223, 224 is repeated two times at 180 degrees circumferential separation but could be repeated three (120 degrees) or four (90 degrees) times.

### CASING COLLAR LOCATOR MODULE 11

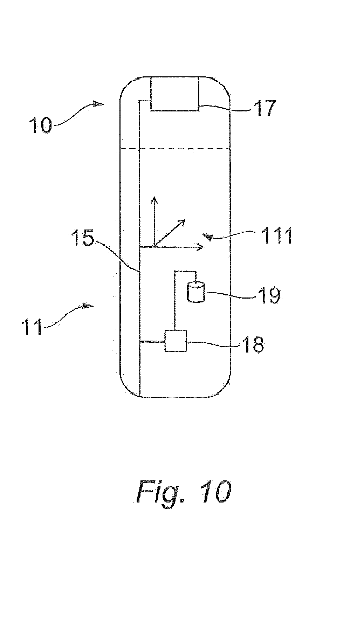

Figure 10 is a diagrammatic illustration of a casing collar locator (CCL) module 11 according to an exemplary embodiment of the present disclosure. The CCL module 11 comprises a magnetic sensor 111. In a much preferred embodiment of the invention the magnetic sensor 111 is a silicon magnetometer. The magnetic sensor 111 can be a three axis arrangement of magnetometers. The signal of the magnetic sensor 111 can be amplified by programmable gain instrument amplifiers. The amplified signal can be sampled by, for example 24 bit AD converter. The magnetic sensor 111 has a very wide dynamic range so that the sensor 111 can see the magnetic perturbation as casing collars are passed by the CCL module 11 as the tool 9 is run into or pulled out of the hole. With a known reference, these collars give both depth and line speed information. The data indicating the depth and possibly the line speed can be merged with the other information from the other sensors present. The CCL module 11 comprises a master bus 18 which is configured to perform the merging and data control. The master bus 18 is configured to detect which sensors (i.e. modules 11, 12, 13, 14) are connected and applicable/available to be used. The master bus 18 is further configured to trigger the other sensors to take a sample and receive data indicating the sample. The master bus 18 is coupled with the various sensors by the bus common bus 15. The master bus 18 is further configured to synchronize all samples so that the software can apply the data about the wellbore to detect the leak by using many different characteristics of the well and the leak. The synchronized data samples are stored in a data storage 19, such as a memory or a hard disk.

In the example of Figure 10 the connector module 10 is merged with the CCL module 11. The CCL module 11 comprises an interface 17 for connecting the data log outside the downhole logging tool 9.

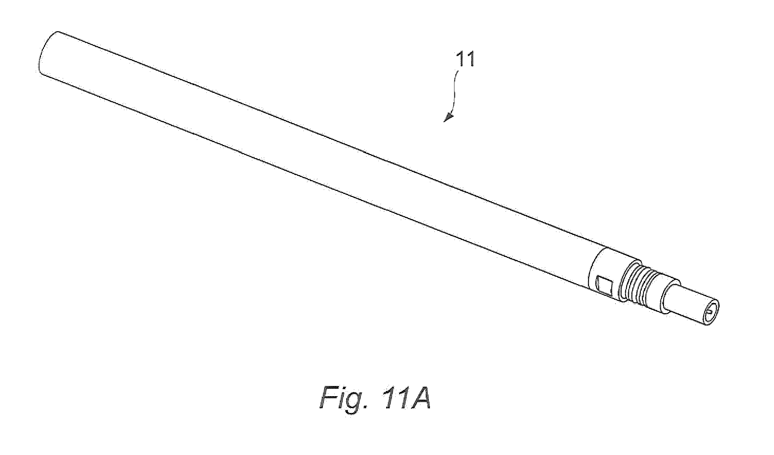

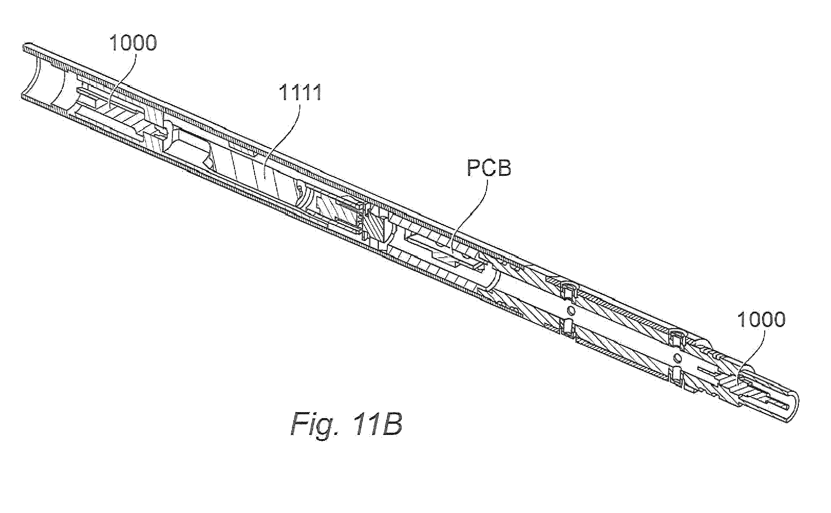

Figure 11A shows an example of the casing collar locator module 11 for use in the downhole logging tool 9. The casing collar locator module 11 is further discussed in Figure 11 B.

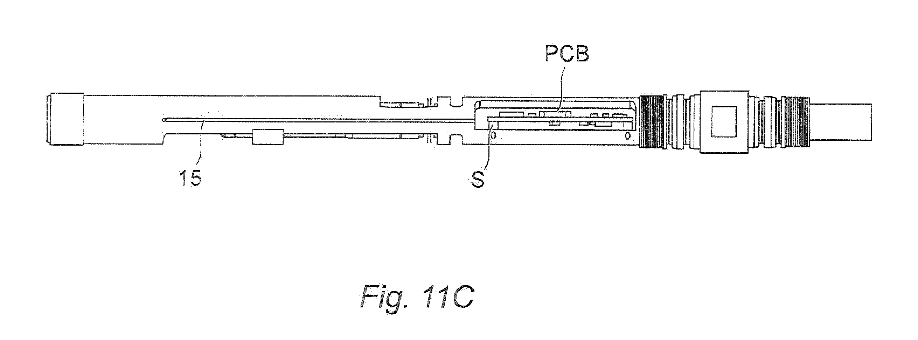

Figure 11 B shows a more detailed side, cross-sectional view of the downhole logging tool 9 comprising the CCL module 11. The CCL module 11 comprises a printed circuit board (PCB) having the master bus 18 and the data storage 19. A battery 1111 is also shown feeding electric power to the tool 9 for the sensors and to the master bus 18. The exemplary CCL module of figure 11 shows also connectors 1000, which are configured to connect different modules to the lower end thereof.

Each module 11, 12, 13, 14 comprises suitable arrangements of male and/or female connectors 1000 so that the downhole logging tool 9 can be built modularly from the modules by connecting the modules to each other with the co-operating male and female connecters 1000.

Figure 11 C shows another cross-sectional side view of the CCL module 11 of Figure 11A. A printed circuit board PCB is shown within the CCL module 11 configured to perform the operation of the CCL module 11 as described. PCB is within a space S inside the module 11. Space S can, for example, be 3,6 mm height. The bus 15 is shown and coupled with the PCB. The diameter of the bus 15 can, for example, be 1 mm so that cable or a wire can fit in.

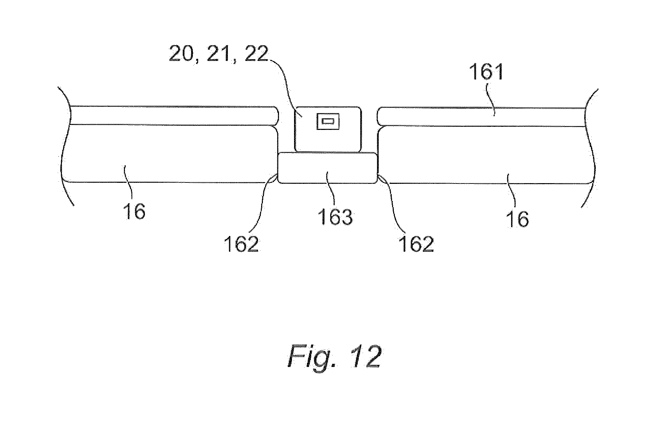

Figure 12 is a diagrammatic illustration of a sensor (references 20, 21, 22 in the figures) in the downhole logging tool 9 according to an exemplary embodiment of the present disclosure. The sensor 20, 21, 22 is illustrated in the copper stud probe 163. The sensor 20, 21, 22 is located such that it will be very close to the well fluid and therefore in good fluid communication therewith. Additionally the sensor 20, 21, 22 is thermally isolated from the thermal mass of the tool 9. Therefore the sensors 20,21,22 can be in as close thermal contact with the fluid as possible and as thermally isolated from the thermal mass of the tool 9 as possible. A pressure seal 162 is used to isolate the sensor 20, 21, 22 from the housing 16 and to keep the fluid from entering the tool 9.

In a further embodiment using the bridge, the sensors 20, 21, 22 should be mounted in as 'thermally symmetric' way as possible to ensure the default output of the electric bridge coupling is zero. Accordingly, the metal mass of the housing 16 is thermally isolated from the well fluid by an insulation layer 161 such as a peek shroud with openings over the sensor probes 163.

In an embodiment of the invention, the sensor probes 163 are made of copper, whilst the pressure housing 16 is stainless steel. This has an effect to further differentiate the thermal time constants, and allow environment changes to be visible until equilibrium is reach in the bridge coupling after all time delays have expired.

It will be apparent to those skilled in the art that various modifications and variations can be made to the downhole logging tool. Other embodiments will be apparent to those skilled in the art from consideration of the specification and practice of the disclosed downhole logging tool. It is intended that the specification and examples be considered as exemplary only, with a true scope being indicated by the following claims and their equivalents.

### LIST OF ELEMENTS

A downhole logging tool
- 1: wellbore
- 2: earth
- 3: hydrocarbon bearing formation
- 4: surface
- 5: perforations
- 6: casing tubing
- 7: production tubing
- 8: string
- 9: downhole logging tool
- 10: module, connector module
- 11: module, casing collar locator module
- 12: module, flow meter module
- 13: module, differential temperature module
- 14: module, flow direction module
- 15: common bus
- 16: body, housing
- 17: interface
- 18: main bus
- 19: data storage
- 20: sensor
- 201: component,
- 202: component,
- 203: component,
- 204: component,
- 21: sensor
- 211: component
- 212: component
- 213: component
- 214: component
- 22: sensor
- 221: component
- 222: component
- 223: component
- 224: component
- 23: heater, temperature generator
- 24: channel
- 25: internal passageway

## Claims

1. A downhole logging tool (9), comprising:
a. a sensor device (9) comprising a sensor configured to electrically detect at least one physical characteristic of downhole fluid and to output a signal representative of the detection;
b. wherein the sensor comprises a bridge circuit having a first (201, 211, 221), second (202, 212, 222), third (203, 213, 223) and fourth (204, 214, 224) electric component for electric detection of the at least one physical characteristic of the downhole fluid; the first (201, 211, 221) and second (202, 212, 222) electric components being situated in close proximity and next to each other, the third (203, 213, 223) and fourth (204, 214, 224) electric components being situated in close proximity and next to each other; and wherein the third (203, 213, 223) and fourth (204, 214, 224) electric components are situated at a distance apart from the first (201, 211, 221) and second (202, 212, 222) electric components.

2. A downhole logging tool (9) as claimed in claim 1, wherein within the bridge circuit, a first (201, 211, 221) and a third (203, 213, 223) electric component are configured to be in series in a first arm, a second and a fourth (204, 214, 224) electric component are configured to be in series in a second arm, and the first (201, 211, 221) and the third (203, 213, 223) electric component in the first arm are configured to be in parallel with the second (202, 212, 222) and the fourth (204, 214, 224) electric components in the second arm; wherein the first (201, 211, 221) and the third (203, 213, 223) electric components are configured to have a higher resistance at a given temperature than the second (202, 212, 222) and the fourth (204, 214, 224) electric components.

3. A downhole logging tool (9) as claimed in any preceding claim,
wherein the electric components (201 - 204, 211 - 214, 221 - 224) comprise resistor components.

4. A downhole logging tool (9) as claimed in claim 3, wherein each of the four electric components (201 - 204, 211 - 214, 221 - 224) is provided on an arm of the bridge circuit and each are of a different resistance; and each arm has two elements of the same nominal resistance value at the same temperature.

5. A downhole logging tool (9) as claimed in claim 3 or 4, wherein the third (204) electric component comprises several further electric components in parallel so as to establish a lower resistance for balance, and in use with a small current in each further resistance component to inhibit self heating.

6. A downhole logging tool (9) as claimed in any preceding claim,
wherein the sensor device (9) comprises a temperature module (13) including a sensor (21) for electric detection of temperature variations of the fluid.

7. A downhole logging tool (9) as claimed in any preceding claim,
wherein the sensor device (9) comprises a flow meter module (12) including a sensor for electric detection of the flow of the fluid.

8. A downhole logging tool (9) as claimed in any preceding claim,
wherein the first (201, 211, 221) and the second (202, 212, 222) electric components are configured to be of a different resistance such that, in use, flow of the downhole fluid removes more heat from the resistor component having lower resistance than from the resistor component having higher resistance.

9. A downhole logging tool (9) as claimed in any preceding claim,
wherein the downhole logging tool (9) includes one of a heater (23) and cooler, configured to introduce a heat pulse or cold pulse to the downhole fluid so that the heat pulse/cold pulse moves along with the flow of the fluid.

10. A downhole logging tool (9) as claimed in claim 9, wherein the one of the heater (23) and cooler is situated between a first pair of electric components (221, 222) and a second pair of electric components (223, 224).

11. A downhole logging tool (9) as claimed in any one of claims 9 to 10, wherein the downhole logging tool includes a channel (24) for receiving the flow of the downhole fluid, the channel (24) containing the two pairs of electric components (221 & 222, 223 & 224) and the one of the heater (23) and cooler are within the wall of the channel (24).

12. A downhole logging tool (9) as claimed in any preceding claim,
wherein the downhole logging (9) tool includes a feedback loop circuit which is configured to drive the bridge circuit and to maintain generally constant output of the bridge circuit, wherein a control signal of the feedback loop is an indication of the flow of the downhole fluid.

13. A downhole logging tool (9) as claimed in any preceding claim,
wherein the sensor device (9) comprises a first detection point and a second detection point situated distantly apart from the first detection point, and wherein a sensor in the sensor device (9) is configured to electrically measure a difference between the first detection point and the second detection point.

14. A downhole logging tool (9) as claimed in any preceding claim,
wherein the sensor device (9) comprises two or more sensor modules (10-14) are provided and configured to be detachably attached with each other, wherein each sensor module (10-14) is configured to electrically detect at least one physical characteristic of downhole fluid and to output a signal representative of the detection and a control module is configured to receive the signals from the sensor module (10-14), wherein the control module is further configured to provide data representative of the signals for use in detection of a downhole leak and to merge and synchronize the data representative of the signals, optionally from two or more sensors.

15. A downhole logging tool (9) as claimed in any preceding claim,
wherein the at least one sensor device (9) comprises a casing collar locator module (11) including a magnetic sensor configured to detect a downhole casing collar by magnetic detection, wherein the detection is indicative of the depth of said module within a wellbore, wherein the casing collar locator module (11) is optionally further configured to detect which sensor devices (20, 21, 22) are connected and ready for use, and in use to trigger the sensor devices (20, 21, 22) to start the detection.
